## Europäisches Patentamt
## European Patent Office
## Office européen des brevets

(19)

(11) Veröffentlichungsnummer: **0 065 721**
**B1**

(12) # EUROPÄISCHE PATENTSCHRIFT

(45) Veröffentlichungstag der Patentschrift:
06.03.85

(51) Int. Cl.⁴: **F 16 B 13/06**

(21) Anmeldenummer: 82104250.4

(22) Anmeldetag: **14.05.82**

I

(54) **Spreizdübel.**

(30) Priorität: **27.05.81 DE 3121198**

(43) Veröffentlichungstag der Anmeldung:
**01.12.82 Patentblatt 82/48**

(45) Bekanntmachung des Hinweises auf die Patenterteilung:
**06.03.85 Patentblatt 85/10**

(84) Benannte Vertragsstaaten:
**AT BE CH FR GB LI SE**

(56) Entgegenhaltungen:
**CH - A - 457 978**
**DE - A - 2 730 618**
**DE - C - 210 028**
**DE - C - 662 659**
**DE - U - 1 980 464**

(73) Patentinhaber: **HILTI Aktiengesellschaft,**
**FL-9494 Schaan (LI)**

(72) Erfinder: **Ott, Johann, Dipl.-Ing., Dammweg 4,**
**FL-9490 Vaduz (LI)**

(74) Vertreter: **Berg, Wilhelm, Dr. et al, Patentanwälte Dr.**
**Berg Dipl.-Ing. Stapf Dipl.-Ing. Schwabe Dr. Dr. Sandmair**
**Postfach 86 02 45 Stuntzstrasse 16,**
**D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Spreizdübel mit Spreizhülse, Distanzhülse und zwischen Spreizhülse und Distanzhülse sich abstützendem Abstandshalter.

Spreizdübel der genannten Art dienen dem Befestigen verschiedenster Gegenstände an Bauwerksteilen und dergleichen. Hierzu müssen die Gegenstände unter satter Anlage am Bauwerksteil festgespannt werden.

Ein bekannter Spreizdübel besteht im wesentlichen aus einer Spreizhülse, einer Distanzhülse und einem zwischen diesen achsgleich angeordneten, hülsenförmigen Abstandshalter. Spreizhülse, Abstandshalter und Distanzhülse sind von einem Ankerbolzen durchgriffen, dessen eines Ende einen kegelstumpfförmigen, in die Spreizhülse einziehbaren Spreizkörper faßt und dessen anderes Ende ein Spannglied in Form eines Schraubenkopfes oder einer Gewindemutter trägt.

Zum Verankern des Spreizdübels bzw. zum Befestigen eines Gegenstandes werden die vom Ankerbolzen zu einer Einheit zusammengehaltenen Dübelteile durch eine Bohrung des zu befestigenden, hilfsweise gegen den Bauwerksteil gehaltenen Gegenstand hindurch in eine vorgefertigte Aufnahmebohrung des Bauwerkteiles eingeschoben, bis das Spannglied direkt oder über eine Unterlagscheibe indirekt am besagten Gegenstand anliegt. Durch anschließendes Drehen des Spanngliedes kommt es zum Einziehen des Spreizkörpers in die Spreizhülse, wobei sich das Spannglied an der Distanzhülse axial abstützt, um so die für das Einziehen des Spreizkörpers erforderliche Kraft aufbringen zu können. Durch das Einziehen des Spreizkörpers in die Spreizhülse wird diese radial geweitet und legt sich unverschieblich an der Wandung der Aufnahmebohrung an.

Zum Festspannen des Gegenstandes am Bauwerksteil ist die Distanzhülse gegen die Spreizhülse hin verschiebbar, indem die Distanzhülse teleskopartig in den hülsenförmigen Abstandshalter einläuft und diesen radial weitet. Diese Verschiebbarkeit ist insbesondere erforderlich, um eine allfällige Hohllage des Gegenstandes gegenüber dem Bauwerksteil zu beseitigen.

Ein Nachteil dieses Spreizdübels besteht in der großen Wandstärke des Abstandshalters, die zur Erzielung ausreichender Steifigkeit erforderlich ist. Dies bedingt aber sehr große Auftreibkräfte für das radiale Weiten des Abstandshalters, zumal das Weiten durch Sprengen des Abstandshalters erfolgt. Der hierfür erforderliche große Kraftaufwand vermag den Handhabenden unter Umständen dahingehend zu irritieren, daß er vorzeitig annimmt, ein weiteres Anziehen des Spanngliedes sei nicht mehr möglich und somit auf Kosten eines ausreichenden Festspannens des Gegenstandes den Befestigungsvorgang nicht zu Ende führt.

Die große Wandstärke des Abstandshalters hat aber auch zur Folge, daß die Wandstärke der Distanzhülse entsprechend klein gehalten werden muß, um beim teleskopartigen Einlaufen der Distanzhülse das Eintreten des Abstandshalters in der zwischen Ankerbolzen und Wandung der Aufnahmebohrung bestehenden Ringspalt zu ermöglichen. Die geringe Wandstärke der Distanzhülse beeinträchtigt aber deren Biegesteifigkeit, so daß die Aufnahmefähigkeit für Querkräfte relativ klein ist.

Der Erfindung liegt die Aufgabe zugrunde, einen Spreizdübel zu schaffen, mit dem das Überbrücken von Hohllagen mit definiertem, kleinem Kraftaufwand möglich ist, und der auch große Querkräfte aufzunehmen vermag.

Erfindungsgemäß wird die Aufgabe dadurch gelöst, daß der Abstandshalter als in Umfangsrichtung reckbare Metallhülse ausgebildet ist, die in ungerecktem Zustand zur Abstützung der Distanzhülse einen von der kreisrunden Form abweichenden, die Außenkontur der Distanzhülse nicht überragenden Querschnitt aufweist und in gerecktem Zustand eine kreisrunde Form zu bilden vermag, deren Innendurchmesser mindestens dem Außendurchmesser der Distanzhülse entspricht.

Die Wandung der Metallhülse besitzt in dem in der Normalebene zur Hülsenlängsachse liegenden Querschnitt in ungerecktem Zustand eine ungleichmäßige Krümmung, die sich in Umfangsrichtung der Metallhülse dem durch die Hülsenlängsachse definierten Zentrum abwechslungsweise nähert bzw. sich von diesem entfernt. Das Nähern bzw. Entfernen der Wandung kann beispielsweise durch einen polygonen Verlauf, durch eine Wellenkontur oder vorzugsweise durch einen innerhalb eines Kreisringes liegenden zick-zack-förmigen Querschnitt erfolgen. Diesfalls beschreiben die dem Zentrum der Metallhülse nächsten Punkte den Inkreis und die vom Zentrum entferntesten Punkte den Umkreis des Kreisringes.

Durch die aufgezeigte Querschnittsform, insbesondere die zick-zack-Kontur, ergeben sich in Parallelerstreckung zur Hülsenlängsachse gerichtete sickenähnliche Versteifungen, die der Metallhülse auch bei kleiner Wandungsdicke hohe Steifigkeit vermitteln. Die Metallhülse ist also den beim Einschieben des Spreizdübels in die Aufnahmebohrung oder beim Spreizvorgang des Dübels auftretenden axialen Belastungen gewachsen und knickt nicht.

Bei fortschreitendem Spreizvorgang muß sich zur Überbrückung allfälliger Hohllagen, wie bereits erläutert, die Distanzhülse der Spreizhülse nähern können. Hierzu läuft die Distanzhülse in die Metallhülse ein. Dies ist unter definiertem und kleinem Kraftaufwand möglich, da die besagte Kontur der Wandung ein leichtes Aufweiten der Metallhülse ermöglicht. Im aufgeweiteten, d. h., gereckten Zustand ist die ungleichmäßige Krümmung aufgehoben — die Mantelhülse hat also eine klassische hohlzylindrische Form angenommen.

Da die erfindungsgemäße Form der Metallhülse eine dünne Wandungsstärke derselben ermöglicht, kann die Distanzhülse ohne nennenswerte Querschnittseinbuße dimensioniert sein; der zwischen der Distanzhülse und der Aufnahmebohrung bestehende Ringraum vermag die gereckte dünnwandige Blechhülse immer aufzunehmen. Dank dessen, daß das Stützrohr relativ dickwandig ausgeführt sein kann, ist dieses auch zur Aufnahme großer Querkräfte geeignet.

Um ein ideales Maß der Aufdehnbarkeit der Metallhülse zu erzielen, ist der Umkreisdurchmesser des durch den besagten Querschnitt der Metallhülse beschriebenen Kreisringes kleiner als der Außendurchmesser der Distanzhülse ausgebildet. Dadurch ist vor allem aber auch sichergestellt, daß beim Einbringen des Spreizdübels in die Aufnahmebohrung die Metallhülse den Einbringvorgang nicht durch Klemmung hemmt.

Die gereckte Länge der in einer Normalebene zur Hülsenlängsachse verlaufenden Innenkontur der Mantelhülse ist zweckmäßig geringfügig größer als der Außenumfang der Distanzhülse. So wird sichergestellt, daß die Weitung der Metallhülse ausschließlich im Rahmen der durch die Querschnittskontur der Wandung konstruktiv vorgegebenen Dehnbarkeit erfolgt. Es kommt also nicht zu einer materialseitigen Überdehnung — ein Reißen der Metallhülse ist ausgeschlossen.

Um den Beginn des Einlaufens der Distanzhülse in die Metallhülse zu erleichtern, weist der der Metallhülse zugeordnete Endbereich der Distanzhülse zweckmäßig einen sich gegen die Metallhülse verjüngenden, in diese einragenden Außenmantel auf. Das für problemloses Einlaufen der Distanzhülse in die Metallhülse erforderliche achsgleiche Ausrichten der genannten Teile wird in Weiterbildung der Erfindung ferner dadurch begünstigt, indem der der Distanzhülse zugeordnete Endbereich der Metallhülse eine gegen deren anderen Endbereich hin sich verjüngende Innenkontur aufweist.

Zweckmäßig läuft die sich verjüngende Innenkontur der Metallhülse an einer normal zur Hülsenlängsachse verlaufenden, gegen das Hülsenzentrum sich erstreckenden Schulter aus, an der sich die vordere Stirnseite der Distanzhülse abstützen kann. Die Kraftaufnahmefähigkeit dieser Schulter ist konstruktiv steuerbar und wird so gewählt, daß sich die Distanzhülse während des Einbringens des Dübels in die Aufnahmebohrung und zumindest während einer ersten Phase des Spreizvorganges hier abzustützen vermag. Erst in der Folge des Spreizvorganges, wenn es also gilt, eine Hohllage zwischen dem zu befestigenden Gegenstand und dem Bauwerksteil zu beseitigen, übersteigt die Dübelspannkraft die Kraftaufnahmefähigkeit der Schulter, worauf die Distanzhülse alsdann unter der geschilderten Weitung der Metallhülse gegen die Spreizhülse vorläuft.

Es ist zweckmäßig, wenn die Metallhülse während des Spreizvorganges des Dübels auch eine Verdrehsicherung der Spreizhülse in der Aufnahmebohrung sowie einen ausreichenden axialen Halt des Spreizdübels in der Aufnahmebohrung bewerkstelligen, so daß beispielsweise bei Deckenmontage ein selbsttätiges Herausfallen des Dübels aus der Aufnahmebohrung verhindert wird. Mit Vorteil weist hierzu die Metallhülse Sperrnocken für die Spreizhülse und die Außenkontur der Spreizhülse überragende, radial zurückweichbare Sperrlappen zur Drehsicherung auf.

Die Erfindung soll nunmehr anhand einer Zeichnung, die ein Ausführungsbeispiel zeigt, näher erläutert werden. Der

Fig. 1 ist ein Spreizdübel in ungespreiztem Zustand, im Längsschnitt, der

Fig. 2 ein Schnitt durch den in Fig. 1 gezeigten Spreizdübel gemäß Schnittlinie II-II entnehmbar.

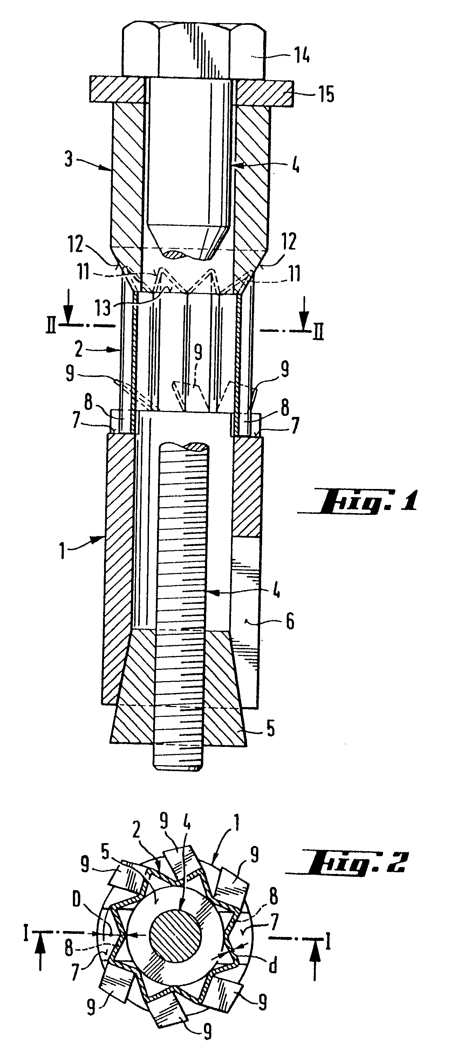

Der in Fig. 1 gezeigte Spreizdübel besteht im wesentlichen aus einer gesamthaft mit 1 bezeichneten Spreizhülse, einem als Metallhülse 2 ausgebildeten Abstandshalter, einer Distanzhülse 3, einem diese Teile durchsetzenden Ankerbolzen 4 (unterbrochen gezeichnet) und einem vom Ankerbolzen 4 in die Spreizhülse 1 einziehbaren Spreizkörper 5 mit kegeliger Mantelkontur.

Um das radiale Weiten der Spreizhülse 1 zu begünstigen, weist diese einen oder mehrere vom vorderseitigen Ende her eingearbeitete Längsschlitze 6 auf. Ferner ist die hintere Stirnseite der Spreizhülse 1 mit Einschnitten 7 versehen, die dem drehfesten Eingriff der Metallhülse 2 dienen.

Die Metallhülse 2 weist in der Normalebene zur Hüllenlängsachse, wie dies die Fig. 2 zeigt, einen Querschnitt mit zick-zack-Verlauf auf. Die dem Zentrum der Metallhülse 2 nächsten bzw. entferntesten Punkte der zick-zack-Kontur beschreiben einen Kreisring, dessen Ringdicke D wesentlich größer als die Wandungsdicke d ist.

Der drehfesten Verbindung der Metallhülse 2 mit der Spreizhülse 1 dienen axial vorstehende Sperrnocken 8, welche in die Einschnitte 7 der Spreizhülse 1 formschlüssig einragen. Der Außenmantel der Metallhülse 2 wird im vorderen Abschnitt zudem von radial zurückweichbaren Sperrlappen 9 überragt, die auch die Außenkontur der Spreizhülse 1 überstehen.

Um das Einlaufen der Distanzhülse 3 in die Metallhülse 2 unter Spreizbedingungen des Dübels zu erleichtern, ist die Metallhülse 2 in deren hinterem Endbereich mit einer sich nach vorne verjüngenden Innenkontur 11 versehen, in die ein sich korrespondierend verjüngender Endbereich 12 des Außenmantels der Distanzhülse 3 eingreift.

Ein frühzeitiges Einlaufen der Distanzhülse 3 in die Metallhülse 2 wird durch eine sich normal zur Hülsenlängsachse erstreckende Schulter 13 am verjüngten Auslauf der Innenkontur 11 verhindert, an dem die vordere, normal zur Hülsenlängsachse gerichtete Rest-Stirnfläche der Distanzhülse 3 aufsteht.

Zur Verankerung des Spreizdübels wird dieser als Einheit, wie sie der Fig. 1 entnehmbar ist, durch einen nicht gezeigten zu befestigenden Gegenstand hindurch in die Aufnahmebohrung des Bauwerkteiles eingeschoben. Dabei legen sich die Sperrlappen 9 an der Wandung der Aufnahmebohrung unter Eigenvorspannung an und schaffen so einen provisorischen Halt des Spreizdübels gegen Verdrehen und axiales Verschieben im Bauwerksteil.

Durch anschließendes Drehen des Ankerbolzens 4 unter Angriff eines Werkzeuges an dem als Schraubenkopf 14 ausgebildeten Spannglied wird der Spreizkörper 5 in die Spreizhülse 1 eingezogen, wobei sich der Schraubenkopf 14, entsprechend der aufzubringenden Einziehkraft für den Spreizkörper 5, über eine Unterlagscheibe 15 an der Distanzhülse 3 abstützt. Durch das beginnende Einziehen des Spreizkörpers 5 legt sich die Spreizhülse 1 in der Aufnahmebohrung axial fest, worauf die aufzubringende Kraft für weiteres Einziehen des Spreizkörpers 5 stark zunimmt. Sobald diese Kraft die Kraftaufnahmefähigkeit der Schulter 13 übersteigt, beginnt die Distanzhülse 3 sich in die Metallhülse 2 vorzuschieben, was ein Recken der letzteren zur Folge hat.

In gerecktem Zustand besitzt die Metallhülse 2 einen kreisrunden Querschnitt und trägt so um das Maß deren zweifachen Wandungsdicke d zur Durchmesservergrößerung der Distanzhülse 3 bei. Durch das Einlaufen der Distanzhülse 3 in die Metallhülse 1 läßt sich eine allenfalls vorhandene Hohllage des zu befestigenden Gegenstandes eliminieren, so daß eine satte Anlage des Gegenstandes am Bauwerksteil erzielt wird.


## Patentansprüche

1. Spreizdübel mit Spreizhülse (1), Distanzhülse (3) und zwischen Spreizhülse und Distanzhülse sich abstützendem Abstandshalter, dadurch gekennzeichnet, daß der Abstandshalter als in Umfangsrichtung reckbare Metallhülse (2) ausgebildet ist, die in ungerecktem Zustand zur Abstützung der Distanzhülse (3) einen von der kreisrunden Form abweichenden, die Außenkontur der Distanzhülse (3) nicht überragenden Querschnitt aufweist und in gerecktem Zustand eine kreisrunde Form zu bilden vermag, deren Innendurchmesser mindestens dem Außendurchmesser der Distanzhülse entspricht.

2. Spreizdübel nach Anspruch 1, dadurch gekennzeichnet, daß die Metallhülse (2) in ungerecktem Zustand einen innerhalb eines Kreisringes liegenden zick-zack-förmigen Querschnitt aufweist.

3. Spreizdübel nach Anspruch 1 bis 2, dadurch gekennzeichnet, daß der der Metallhülse (2) zugeordnete Endbereich (12) der Distanzhülse (3) einen sich gegen die Metallhülse (2) verjüngenden, in diese einragenden Außenmantel aufweist.

4. Spreizdübel nach einem der Ansprüche 1 bis 3, dadurch gekennzeichnet, daß der der Distanzhülse (3) zugeordnete Endbereich der Metallhülse (2) eine gegen deren anderen Endbereich hin sich verjüngende Innenkontur (11) aufweist.

5. Spreizdübel nach Anspruch 4, dadurch gekennzeichnet, daß die sich verjüngende Innenkontur (11) der Metallhülse (2) an einer normal zur Hülsenlängsachse verlaufenden, gegen das Hülsenzentrum sich erstreckenden Schulter (13) ausläuft.

6. Spreizdübel nach einem der Ansprüche 1 bis 5, dadurch gekennzeichnet, daß die Metallhülse (2) Sperrnocken (8) für die Spreizhülse (1) und die Außenkontur der Spreizhülse überragende, radial zurückweichbare Sperrlappen (9) zur Drehsicherung aufweist.


## Claims

1. An expansion bolt with expanding sleeve (1), distance sleeve (3) and spacer supported between expanding sleeve and distance sleeve, characterised in that the spacer is constructed in the form of a metal sleeve (2) which can be stretched in the circumferential direction and which, in the unstretched state, in order to support the distance sleeve (3), has a cross-section differing from the circular shape and not projecting beyond the outside contour of the distance sleeve (3), and in the stretched state is able to form a circular shape, the internal diameter of which corresponds at least to the external diameter of the distance sleeve.

2. An expansion bolt according to claim 1, characterised in that, in the unstretched state, the metal sleeve (2) has a zig-zag shaped cross-section lying inside a ring-shaped area.

3. An expansion bolt according to claims 1 to 2, characterised in that the end region (12) of the distance sleeve (3) associated with the metal sleeve (2) comprises an outer wall which becomes narrower towards the metal sleeve (2) and projects into this.

4. An expansion bolt according to one of the claims 1 to 3, characterised in that the end region of the metal sleeve (2) associated with the distance sleeve (3) comprises an internal contour (11) which becomes narrower towards its other end region.

5. An expansion bolt according to claim 4, characterised in that the narrowing internal contour (11) of the metal sleeve (2) ends at a shoulder (13) extending normally to the longitudinal axis of the sleeve and extending towards the centre of the sleeve.

6. An expansion bolt according to one of the claims 1 to 5, characterised in that the metal sleeve (2) comprises stop dogs (8) for the expanding sleeve (1) and detent tongues (9) which project beyond the external contour of the expanding sleeve and which can give way radially, for preventing rotation.

**Revendications**

1. Cheville à expansion comprenant une douille expansible (1) une douille d'écartement (3) et une entretoise s'appuyant entre la douille expansible et la douille d'écartement, caractérisé en ce que l'entretoise est constituée sous forme d'une douille métallique (2) pouvant être étirée en direction périphérique, présentant à l'état non étiré et pour supporter la douille d'écartement (3) une section transversale différente d'une forme ronde et ne dépassant pas du contour externe de la douille d'écartement (3), et pouvant, à l'état étiré, prendre une forme ronde dont le diamètre interne correspond au moins au diamètre externe de la douille d'écartement.

2. Cheville à expansion selon la revendication 1, caractérisée en ce que la douille métallique (2), à l'état non étiré, présente une section transversale en forme de zigzag située à l'intérieur d'un anneau circulaire.

3. Cheville à expansion selon la revendication 1 ou 2, caractérisée en ce que la zone d'extrémité (12) de la douille d'ecartement (3) qui est associée à la douille métallique (2) comprend une enveloppe externe allant en diminuant en direction de la douille métallique (2) et pénétrant dans cette dernière.

4. Cheville à expansion selon l'une quelconque des revendications 1 à 3, caractérisée en ce que la zone d'extrémité de la douille métallique (2) qui est associée à la douille d'écartement (3) présente un contour interne (11) allant en diminuant par rapport à son autre zone d'extrémité.

5. Cheville à expansion selon la revendication 4, caractérisée en ce que le contour interne (11) de la douille métallique (2) qui va en diminuant part d'un épaulement (13) perpendiculaire à l'axe longitudinal de la douille et s'étendant en direction du centre de la douille.

6. Cheville à expansion selon l'une quelconque des revendications 1 à 5, caractérisée en ce que la douille métallique (2) comprend des butées de blocage (8) pour la douille expansible (1) et que le contour externe de la douille expansible comprend des pattes de blocage (9) en saillie, aptes à reculer radialement et interdisant toute rotation.

**Fig. 1**

**Fig. 2**